## Europäisches Patentamt

## European Patent Office

## Office européen des brevets

(19)

(11) Numéro de publication: **0 194 921**
**B1**

(12) # FASCICULE DE BREVET EUROPÉEN

(45) Date de publication du fascicule du brevet:
04.01.89

(51) Int. Cl.⁴: **H 02 H 7/085**

(21) Numéro de dépôt: **86400433.8**

(22) Date de dépôt: **28.02.86**

(54) **Moteur électrique comportant un dispositif de protection à thermistances contre les surintensités.**

(30) Priorité: **15.03.85 FR 8503858**

(43) Date de publication de la demande:
**17.09.86 Bulletin 86/38**

(45) Mention de la délivrance du brevet:
**04.01.89 Bulletin 89/1**

(84) Etats contractants désignés:
**AT BE CH DE GB IT LI LU NL SE**

(56) Documents cité:
**DE-A-2 243 949
FR-A-2 212 669
GB-A-2 064 899**

(73) Titulaire: **ETUDES TECHNIQUES ET REPRESENTATIONS INDUSTRIELLES E.T.R.I Société Anonyme, 8 rue Boutard, F-92200 Neuilly-sur- Seine (FR)**

(72) Inventeur: **Sobiepanek, Janusz, 14 Allée de Moulins, F-91190 Gif- Sur- Yvette (FR)**
Inventeur: **Aboukrat, Simon, 1 rue Claude Monet, F-95140 Garges Lès Gonesse (FR)**

(74) Mandataire: **Bouju, André, Cabinet Bouju 38 avenue de la Grande Armée, F-75017 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un moteur électrique comportant un dispositif de protection à thermistances contre les surintensités.

Il est connu d'après le FR-A-2 212 669 de protéger les enroulements d'un moteur électrique en les branchant en série avec une thermistance à coefficient de température positif, c'est-à-dire dont la valeur ohmique est une fonction croissante de la température. Lorsque l'intensité augmente dans le circuit, elle traverse la thermistance, qui s'échauffe et tend à réduire le courant d'alimentation ainsi que la tension aux bornes de l'enroulement alimenté jusqu'à mettre celui-ci hors service.

Un tel dispositif est utilisable, en particulier, sur les moteurs à courant continu commutés électroniquement qui entraînent les ventilateurs de refroidissement des appareils électriques. Le moteur comporte généralement au moins deux enroulements (quatre dans l'exemple) dont l'alimentation aternée est commandée par un détecteur de la position du rotor. Une thermistance unique est montée en série avec l'ensemble des enroulements, eux-mêmes en parallèle l'un par rapport à l'autre. Lorsque le rotor est immobilisé par un obstacle, la thermistance s'échauffe et provoque une chute de tension dans tous les enroulements à la fois. Dans le cas d'un ventilateur de refroidissement, la charge du moteur est nulle à vitesse nulle et lorsque la perturbation a cessé, le refroidissement de la thermistance permet le redémarrage du moteur. Cependant, tant que la thermistance n'est pas revenue à sa valeur normale, elle continue à affecter la tension d'alimentation de l'ensemble des enroulements, de sorte que le redémarrage du ventilateur s'effectue lentement ou même, dans les cas extrêmes, la tension résiduelle n'est pas suffisante pour assurer un redémarrage correct du moteur. De plus, la mise au point du dispositif est delicate. En particulier, la température d'équilibre d'une thermistance donnée sous un courant normal en atmosphère chaude peut être peu différente de la température d'équilibre de la même thermistance sous une intensité dangereuse pour les enroulements, mais en atmosphère fraiche et ventilée.

Il y a donc des risques que l'alimentation des enroulements soit interrompue de manière inutile, ou au contraire maintenue alors que les enroulements sont en danger.

On connaît encore d'après le DE-A-2 243 949 un système dans lequel chaque enroulement est en contact thermique avec une thermistance respective. Les thermistances sont montées en série les unes avec les autres, leur valeur ohmique globale étant mesurée pour déclencher sélectivement un système de protection contre les surintensités.

Le système de protection réagissant à un seuil de la valeur ohmique des trois thermistances en série a l'avantage de pouvoir, en principe, rétablir la pleine puissance d'alimentation dès que ladite valeur ohmique est retombée au-dessous du seuil. Toutefois, l'introduction d'un tel système réagissant à un seuil entraîne un surcoût non négligeable inacceptable pour bien des applications. Si l'on tentait de réduire le coût du dispositif selon le DE-A-2 243 949 en montant la série de thermistances dans le trajet de retour du courant en provenance des enroulements d'un moteur à courant continu dont chaque enroulement serait couplé thermiquement avec l'une des thermistances, on retrouverait les difficultés de redémarrage pour tous les enroulements tant que l'un d'eux a encore une température élevée.

Certes, selon le DE-A-2 243 949, chaque thermistance réagit directement à la variable critique, à savoir la température des enroulements, et le déclenchement du système de protection se produit donc toujours de manière opportune. Toutefois, là encore, l'avantage est atteint au prix d'une mesure coûteuse à savoir le montage d'une thermistance au coeur de chaque enroulement. De plus, ce montage pose des problèmes en cas de défaillance de l'une des thermistances. C'est précisément ce problème que traite plus particulièrement le DE-A-2 243 949.

Le but de la présente invention est de proposer un moteur électrique comportant un dispositif de protection à thermistances contre les surintensités qui, sans faire appel à des techniques coûteuses telles que le système à seuil ou le montage des thermistances dans les enroulements, discrimine de manière fiable les situations normales et les situations dangereuses pour les enroulements, et permette un redémarrage rapide après suppression d'un blocage.

En vue de la réalisation de ce but, on propose selon l'invention un moteur électrique comportant un rotor au moins deux enroulements moteurs et un dispositif de protection contre les surintensités dans les enroulements moteurs, le dispositif de protection comprenant au moins deux thermistances à coefficient de température positif, caractérisé en ce que les deux thermistances sont en parallèle l'une avec l'autre, chacune en série avec au moins un enroulement moteur respectif.

Ainsi, lorsque le moteur est bloqué, seule la thermistance associée à l'enroulement alimenté de façon continue s'échauffe et lors de la cessation du blocage, l'enroulement dont la thermistance ne s'est pas échauffée est alimenté sous une tension normale permettant ainsi un redémarrage rapide du moteur.

De plus, tant que le moteur tourne, chaque thermistance n'est alimentée que pendant une partie du temps. Au contraire, en cas de blocage, l'une des thermistances est alimentée de manière permanente sous l'intensité excessive. Il y a donc une grande différence entre les intensités moyennes dans les deux situations, de sorte que la mise au point est facile et le fonctionnement est fiable.

Selon une version avantageuse de l'invention, le moteur électrique comporte au moins une résistance en dérivation ayant des extrémités respectivement connectées à une borne de deux enroulements moteurs adjacents au niveau d'un point de raccordement de chaque enroulement moteur avec la thermistance associée.

Ainsi, la résistance en dérivation fournit un complément de courant d'alimentation dans le circuit de l'enroulement affecté par le blocage et accélère le redémarrage du rotor.

D'autres caractéristiques et avantages de l'invention résulteront encore de la description ci-après d'exemples non limitatifs en référence aux dessins annexés parmi lesquels:

- la figure 1 est une représentation schématique d'un moteur électrique équipé d'un dispositif de protection contre les surintensités selon l'invention,
- la figure 2 est une représentation schématique partielle d'une variante de réalisation du moteur selon l'invention.

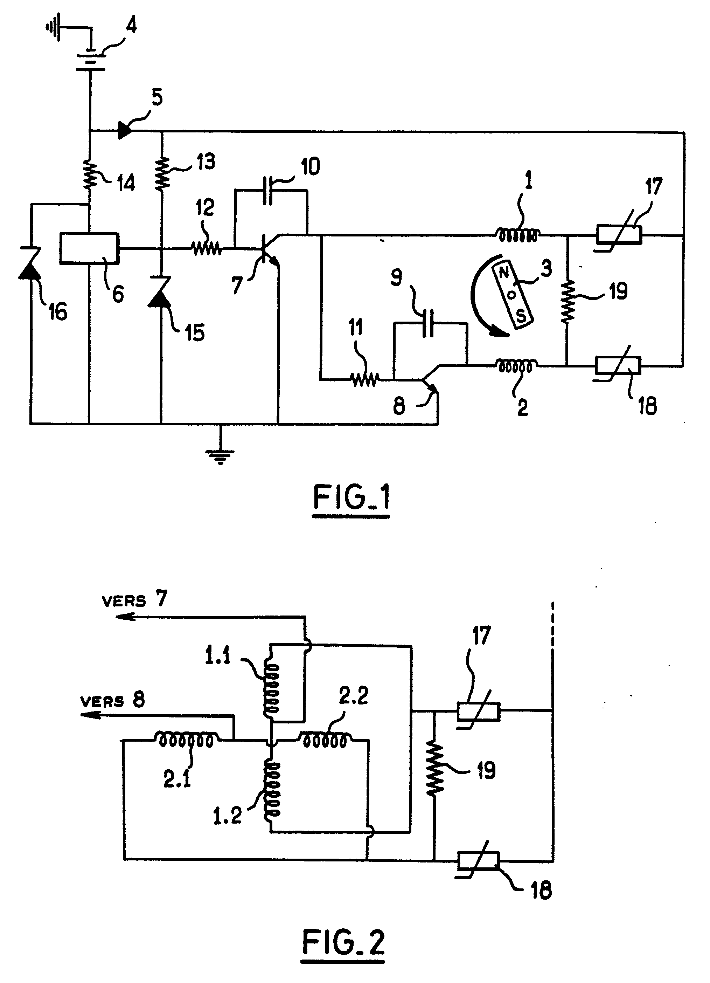

En référence à la figure 1, le moteur à courant continu commuté électroniquement comporte de façon classique deux enroulements moteurs 1, 2 montés en parallèle en regard d'un rotor 3 symbolisé par un barreau aimanté de façon permanente. Les enroulements moteurs 1, 2 sont alimentés par une source de tension continue 4 protégée contre les inversions de polarité par une diode 5.

La commande d'alimentation comprend également de façon classique un détecteur de position du rotor 6, comprenant par exemple un générateur de HALL associé à un transistor (non représentés), relié à des transistors 7 et 8 alternativement bloqués et rendus conducteurs par le détecteur 6. Le circuit comporte en outre, d'une façon connue, des condensateurs antiparasites 9, 10, des résistances d'adaptation 11, 12, 13, 14 et des diodes Zener 15, 16 reliés aux bornes du détecteur de position 6.

Selon l'invention, le dispositif de protection contre les surintensités comporte deux thermistances à coefficient de température positif 17, 18, parallèles entre elles et chacune montée en série respectivement avec un des enroulements moteurs 1, 2.

Le fonctionnement du dispositif est le suivant: si, par exemple, l'enroulement moteur 1 est celui qui et alimenté au moment d'un blocage intempestif du moteur, la thermistance 17 subit un échauffement tandis que la thermistance 18 qui se trouve dans le circuit de l'enroulement moteur 2, non alimenté, demeure à son point de fonctionnement normal.

Lors du déblocage du moteur, le faible courant qui continue de passer dans la thermistance 17 et l'enroulement 1 est suffisant pour faire tourner le rotor d'un angle nécessaire pour faire basculer le détecteur de position 6 qui bloque alors le transistor 7 et rend conducteur le transistor 8.

L'enroulement moteur 2 est alors alimenté dans des conditions normales, c'est-à-dire avec une faible chute dans la thermistance 18. La tension aux bornes de l'enroulement 2 est donc, également, à sa valeur normale, ce qui permet un redémarrage rapide du rotor 3. La thermistance 17 n'étant plus traversée par un courant de façon continue revient alors rapidement à sa température normale et la rotation du moteur redevient régulière.

Selon une version préférée de l'invention, on prévoit en outre une résistance en dérivation 19 ayant des extrémités respectivement connectées à une borne des deux enroulements moteurs 1, 2 au niveau d'un point de raccordement de chaque enroulement moteur avec la thermistance associée, respectivement 17, 18. Le choix de la valeur ohmique de la résistance 19 est déterminé en fonction de la valeur minimum permettant d'obtenir la tension additionnelle nécessaire pour vaincre la résistance des frottements statiques sur l'élément entraîné. Une valeur préférentielle expérimentale est voisine de la valeur ohmique à chaud de la thermistance adjacente 17, 18.

Dans l'exemple invoqué ci-dessus d'un blocage lors de l'alimentation de l'enroulement moteur 1, puis d'un déblocage du moteur, le courant passant par la thermistance 17 est complété par un courant passant dans la thermistance 18 et la résistance en dérivation 19, de sorte que la tension appliquée à l'enroulement moteur 1 est augmentée, ce qui permet au rotor de tourner plus rapidement de l'angle nécessaire pour obtenir la commutation du détecteur de position.

Selon la variante de réalisation illustrée par la figure 2, le circuit comporte généralement les mêmes composants que ceux de la figure 1, et le moteur comporte cette fois quatre enroulements moteurs montés en parallèle deux par deux, respectivement 1.1, 1.2 et 2.1, 2.2. La thermistance 17 est montée en série avec les deux enroulements parallèles 1.1, 1.2 tandis que la thermistance 18 est montée en série avec les deux enroulements parallèles 2.1, 2.2. La résistance en dérivation 19 a ses extrémités connectées à une ligne commune aux enroulements 1.1 et 1.2 d'une part et 2.1 et 2.2 d'autre part; elle a ainsi chacune de ses extrémités connectées à une borne de deux enroulements moteurs adjacents, par exemple, 1.1 et 2.2 au niveau du point de raccordement de chaque enroulement moteur avec la thermistance associée.

Le fonctionnement est identique à celui qui a été décrit à propos de la figure 1, en particulier, lors d'un blocage du moteur au moment de l'alimentation des enroulements moteurs 1.1, 1.2, seule la thermistance 17 s'échauffe, de sorte que lors du déblocage du moteur, les enroulements 2.1, 2.2 sont en état normal de fonctionnement.

Bien entendu, l'invention n'est pas limitée au mode de réalisation décrit ci-dessus et on peut y apporter des variantes d'exécution.

En particulier, on peut adapter le dispositif de protection de l'invention à des moteurs comportant un grand nombre d'enroulements, les enroulements étant associés selon des groupes chacun relié à une thermistance, ou étant individuellement reliés à une thermistance.

## Revendications

1. Moteur électrique comportant un rotor (3), au moins deux enroulements moteurs (1, 2) et un dispositif de protection contre les surintensités dans les enroulements moteurs (1, 2), le dispositif de protection comprenant au moins deux thermistances à coefficient de température positif, caractérisé en ce que les deux thermistances (17, 18) sont en parallèle l'une avec l'autre, chacune en série avec au moins un enroulement moteur (1, 2) respectif.

2. Moteur électrique conforme à la revendication 1, caractérisé en ce qu'il comporte au moins une résistance en dérivation (19) ayant des extrémités respectivement connectées à une borne de deux enroulements moteurs adjacents au niveau d'un point de raccordement de chaque enroulement moteur (1, 2) avec la thermistance associée (17, 18).

3. Moteur électrique conforme à la revendication 2, caractérisé en ce que la résistance en dérivation (19) a une valeur ohmique voisine de la valeur ohmique à chaud d'une thermistance adjacente (17, 18).

## Patentansprüche

1. Elektromotor mit einem Rotor (3), wenigstens zwei Antriebswicklungen (1, 2) sowie einer Schutzvorrichtung gegen überhöhte Ströme in den Antriebswicklungen (1, 2), wobei die Schutzvorrichtung wenigstens zwei Thermistoren mit einem positiven Temperaturkoeffizienten umfaßt, dadurch gekennzeichnet, daß die beiden Thermistoren (17, 18) in parallel zueinander sind, wobei jeder Thermistor mit wenigstens einer jeweiligen Antriebswicklung (1, 2) in Reihe geschaltet ist.

2. Elektromotor nach Anspruch 1, dadurch gekennzeichnet, daß er wenigstens einen Überbrückungswiderstand (19) umfaßt, wovon die Enden jeweils mit einer Klemme zweier benachbarten Antriebswicklungen an einem Anschlusspunkt jeder Antriebswicklung (1, 2) mit dem zugeordneten Thermistor (17, 18) verbunden sind.

3. Elektromotor nach Anspruch 2, dadurch gekennzeichnet, daß der Überbrückungswiderstand (19) einen ohmschen Wert aufweist, der dem ohmschen Wert im warmen Zustand eines angrenzenden Thermistors (17, 18) nahekommt.

## Claims

1. An electric motor comprising a rotor (3), at least two motor windings (1, 2) and a device for providing protection against overcurrents in the motor windings (1, 2), said protection device comprising at least two thermistors having a positive temperature coefficient, characterized in that said two thermistors (17, 18) are in parallel with each other, each of them being mounted in series whith at least one respective motor winding (1, 2).

2. An electric motor according to claim 1, characterized by comprising at least one shunt resistor (19), the ends of said resistor being connected respectively to one terminal of two adjacent motor windings, at a point of connection of each motor winding (1, 2) to the associated thermistor (17, 18).

3. An electric motor according to claim 2, characterized by the shunt resistor (19) having an ohmic value in the vicinity of the hot-state ohmic value of an adjacent thermistor (17, 18).

FIG.1

FIG.2

1